# EUROPEAN PATENT SPECIFICATION

(11) **EP 4 074 532 B1**
(45) Date of publication and mention of the grant of the patent: **19.11.2025**
(21) Application number: 21168774.4
(22) Date of filing: 16.04.2021
(51) Int. Cl.: B60K 1/02, B60K 17/02, B60K 17/344

(54) **A DRIVELINE ARRANGEMENT**
KRAFTÜBERTRAGUNGSANORDNUNG
AGENCEMENT DE CHAÎNE CINÉMATIQUE

(43) Date of publication of application: 19.10.2022
(73) Proprietor: Volvo Construction Equipment AB, 631 85 Eskilstuna (SE)
(72) Inventor: MATTSSON, Per, 294 91 SÖLVESBORG (SE)
(74) Representative: Kransell & Wennborg KB

(56) References cited:
- CN-A- 107 878 171
- DE-A1- 102018 210 897
- JP-A- 2007 131 107
- US-A1- 2013 066 529

## Description

### TECHNICAL FIELD

The present invention relates to a driveline arrangement. The invention also relates to a working machine comprising such a driveline arrangement. The invention is applicable on working machines within the fields of industrial construction machines or construction equipment, in particular articulated or rigid haulers. Although the invention will be described with respect to an articulated hauler, the invention is not restricted to this particular machine, but may also be used in other working machines in which a so-called drop box is used for transferring a rotational load to e.g. a front wheel axle.

### BACKGROUND

In connection with transportation of heavy loads at construction sites or the like, a working machine is often used. The working machines may be utilized for transportations in connection with road or tunnel building, sand pits, mines, forestry and similar environments, and are often provided in the form of an articulated hauler or a rigid hauler.

An articulated hauler generally has a fixed torque distribution between the front axle and the rear axles. The fixed torque distribution is defined by the basic speed ratio of a longitudinal differential in the drop box. The chosen torque distribution will thus be a compromise between what is optimal for different work conditions, such as loaded/unloaded vehicle, forward/reverse, drive/coast, 6x4/6x6 and for different ground conditions, such as rolling resistance, inclination etc.

A longitudinal torque distribution that works well for an unloaded vehicle in a 6x4 condition will have excessively much torque to the front wheels and not enough to the rear wheels when driving fully loaded in a 6x6 condition. This may lead to frequent locking of the drop box differential that in turn may cause poor maneuverability and excessive wear of e.g. dog clutches and tires.

On the other hand, a longitudinal torque distribution dedicated for a loaded vehicle in the 6x6 condition with open differential will have shortcoming when driving unloaded in the 6x4 condition, and in all situations where high torque is needed on the front axle, such as engine braking downhill or reversing uphill.

According to its abstract, US 2013/066529 relates to a vehicle drive device which includes a transmission mechanism, a range changing mechanism, a motor generator, and a control device when a clutch sleeve becomes unable to slide during a range changing process, the clutch sleeve is restored as quickly as possible so that the clutch sleeve can slide, whereby changing of ranges can be completed.

Further, DE 10 2018 210897 describes in its abstract a system for driving an electric vehicle, comprising at least one electrically drivable vehicle axle, two electric machines for driving the at least one vehicle axle, a gear system arranged between the electric machines and the at least one vehicle axle.

Still further, JP2007131107 relates to a motor-driven four-wheel drive car which is equipped with at least one motor as a drive source to drive the front wheels and the rear wheels. Also, CN107878171 discloses a dual-motor drive system and a control method of the dual-motor drive system.

There is thus a desire to provide a more versatile driveline arrangement that function properly for a wider range of operating scenarios.

### SUMMARY

It is an object of the present invention to provide a driveline arrangement that at least partially overcomes the above described deficiencies. This is achieved by a driveline arrangement according to claim 1.

According to a first aspect of the present invention, there is provided a driveline arrangement for a working machine, the driveline arrangement comprising a first electric machine arranged to propel the working machine, and a continuously variable torque distribution arrangement configured to controllably direct a torque from the first electric machine to a front wheel axle and at least one rear wheel axle of the working machine, the continuously variable torque distribution arrangement comprising a main shaft connectable to the first electric machine and to the at least one rear wheel axle, a primary planetary gear set comprising a primary sun gear, a primary ring gear and a primary planet carrier carrying a set of planet gear units, wherein the planet gear units are in meshing engagement with the primary sun gear and the primary ring gear, a second electric machine connected to the primary sun gear, and a gear stage comprising a first gear wheel operatively connected to the primary ring gear, and a second gear wheel connectable to the front wheel axle, the first gear wheel being in meshing engagement with the second gear wheel, wherein the primary planet carrier is operatively connected to the main shaft.

The continuously variable torque distribution arrangement should be construed as a transmission arrangement that controllably transmits torque to the front wheel axle and to the at least one rear wheel axle. This is achieved by controlling the second electric machine. When no torque is supplied by the second electric machine, the torque from the first electric machine is transmitted solely to the at least one rear wheel axle. When the second electric machine transmits a torque to the primary sun gear, a torque distribution occurs such that torque from the first electric machine is divided between the front wheel axle and the at least one rear wheel axle. The torque distribution is thus based on the torque applied on the primary sun gear by the second electric machine.

An advantage is that a fully electrified driveline arrangement can hereby be obtained, where the same energy storage system, e.g. a vehicle battery, can be used for electrifying the first electric machine as well as the second electric machine. A cost efficient, and environmentally friendly, driveline arrangement is thus provided. Also, using the above first and second electric machines will enable the working machine to be able to function properly for a wider range of operating conditions, as the torque span as well as speed span for electric machines are relatively large. Thus, a more versatile driveline arrangement is obtained.

Further, the present invention is also based on the insight that the second electric machine can serve the dual function of distributing torque between the front wheel axle and the at least one rear wheel axle, as well as contribute to electric propulsion of the front wheel axle when the working machine is turning.

As indicated above, and according to an example embodiment, the driveline arrangement may further comprise an energy storage system electrically connected to the first and second electric machines to supply electric power to the first and second electric machines. Thus, a single energy storage system is required, in comparison to the use of e.g. an internal combustion engine as prime mover and e.g. a hydraulic motor as an actuator for the continuously variable torque distribution arrangement.

According to an example embodiment, the primary planetary gear set may be concentrically connected to the main shaft. An advantage is that the continuously variable torque distribution arrangement is compact in its design. In order to make the variable torque distribution arrangement even more compact, the second electric machine may also be arranged concentrically around the main shaft.

According to an example embodiment, each one of the planet gear units of the set of planet gear units may comprise a first planet wheel arranged in meshing engagement with the primary sun gear, and a second planet wheel arranged in meshing engagement with the primary ring gear, the first planet wheel and the second planet wheel being arranged on a common planet wheel shaft.

According to an example embodiment, the first planet wheel may have a larger diameter compared to the second planet wheel.

Hereby, a large basic speed ratio can be achieved by the primary planetary gear set.

According to an example embodiment, the driveline arrangement may further comprise an additional planetary gear set comprising a sun gear, a ring gear and a planet carrier carrying a set of planet gears, wherein the planet gears are in meshing engagement with the sun gear and the ring gear, the sun gear of the additional planetary gear set being operatively connected to the second electric machine and the planet carrier of the additional planetary gear set being operatively connected to the sun gear of the primary planetary gear set, and wherein the ring gear of the additional planetary gear set is stationary.

According to an example embodiment, the driveline arrangement may further comprise an additional gear stage comprising a first additional gear wheel operatively connected to the primary sun gear and a second additional gear wheel operatively connected to the second electric machine, wherein the first additional gear wheel is in meshing engagement with the second additional gear wheel.

An advantage of providing an additional planetary gear set or an additional gear stage is that a torque multiplicator for the second electric machine is obtained. The driveline arrangement may hereby obtain an even further wider range of operating conditions. A further advantage is that a suitable gear ratio can be chosen between the second electric machine and the primary sun gear.

According to an example embodiment, the driveline arrangement may further comprise a gear shifting arrangement connected between the first electric machine and the main shaft. Using a gear shifting arrangement will enable the torque from the first electric machine to the front wheel axle and the at least one rear wheel axle to be increased or decreased depending on the specific driving condition.

According to an example embodiment, the gear shifting arrangement may comprise a first planetary gear set comprising a first set of planetary members, the first set of planetary members comprising a first sun gear, a first ring gear and a first planet carrier carrying a first set of planet gears, wherein the planet gears of the first set of planet gears are in meshing engagement with the first sun gear and the first ring gear, a second planetary gear set comprising a second set of planetary members, the second set of planetary members comprising a second sun gear, a second ring gear and a second planet carrier carrying a second set of planet gears, wherein the planet gears of the second set of planet gears are in meshing engagement with the second sun gear and the second ring gear, at least one member of the first planetary gear set being operatively connected to a member of the second planetary gear set, wherein one member of the first planetary gear set is connected to the main shaft, and one member of the second planetary gear set is connected to the first electric machine, and a gear selection arrangement, comprising a first locking mechanism connected to a member of the first planetary gear set, and a second locking mechanism connected to a member of the second planetary gear set.

By means of the above described gear shifting arrangement, a two-stage transmission is provided which is particularly advantageous for use in combination with the first electric machine. Further, the gear selection arrangement described above, enables for an energy efficient first and second locking mechanisms which may be used as a parking brake for instance. As such, the first and second locking mechanisms may be used for locking the main shaft, thereby locking a number of wheels of the working machine.

According to an example embodiment, the first sun gear is operatively connected to the second planet carrier, the first ring gear is operatively connected to the second ring gear, the second sun gear is connected to the first electric machine, the first ring gear and the second ring gear are connected to the main shaft, the first locking mechanism is connected to the first planet carrier, and the second locking mechanism is connected to the second planet carrier and to the first sun gear. An advantage is that a relatively large step between the first gear stage and the second gear stage is obtainable. Also, the rotational speed may be reduced to a desired, low level for the first gear stage.

According to an example embodiment, the first sun gear is operatively connected to the second sun gear, the first ring gear is operatively connected to the second planet carrier, the first and second sun gears are connected to the first electric machine, the first planet carrier is connected to the main shaft, the first locking mechanism is connected to the first ring gear and to the second planet carrier, and the second locking mechanism is connected to the second ring gear. An advantage is that a relatively small step between the first gear stage and the second gear stage is obtainable.

According to an example embodiment, the gear shifting arrangement may further comprise a third planetary gear set comprising a third set of planetary members, the third set of planetary members comprising a third sun gear, a third ring gear and a third planet carrier carrying a third set of planet gears, wherein the planet gears of the third set of planet gears are in meshing engagement with the third sun gear and the third ring gear, wherein at least one member of the third planetary gear set is operatively connected to a member of the second planetary gear set, and wherein the gear selection arrangement further comprises a third locking mechanism connected to a member of the third planetary gear set.

Hereby, a three-stage transmission is provided which can even further increase the overall ratio coverage between the first electric machine and the main shaft.

According to an example embodiment, the first ring gear is operatively connected to the second planet carrier, the first sun gear is operatively connected to the second ring gear and to the third planet carrier, the second sun gear is operatively connected to the third sun gear, the second and third sun gears are connected to the first electric machine, the first ring gear and the second planet carrier are connected to the main shaft, the first locking mechanism is connected to the first planet carrier, the second locking mechanism is connected to the second ring gear and to the first sun gear and to the third planet carrier, and the third locking mechanism is connected to the third ring gear.

According to an example embodiment, the gear shifting arrangement may comprise a transmission housing, the transmission housing comprising a housing wall assembly defining a transmission housing cavity enclosing at least the first and second planetary gear sets, wherein at least an external portion of each one of the first and second locking mechanisms is located on one side of the transmission housing wall assembly and the transmission housing cavity is located on an opposite side of the transmission housing wall assembly.

By means of the above, at least a portion of each one of the first and second locking mechanisms may be kept outside, or on the outside of, the transmission housing. Such a position implies that e.g. repair and maintenance operations may be performed in a straightforward manner.

According to an example embodiment, the first locking mechanism may be adapted to be controlled by a first fluid pressure conducted to the first locking mechanism such that for at least a first fluid pressure equal to zero overpressure, the first locking mechanism is adapted to assume a locked condition in which the member of the first planetary gear set is locked to the transmission housing, and the second locking mechanism may be adapted to be controlled by a second fluid pressure conducted to the second locking mechanism such that for at least a second fluid pressure equal to zero overpressure, the second locking mechanism is adapted to assume a locked condition in which the member of the second planetary gear set is locked to the transmission housing.

Hereby, the first and second locking mechanisms may be used in an energy efficient manner as a parking brake for instance. As such, the first and second locking mechanisms may be used for locking the main shaft, thereby locking a number of wheels of the working machine. When it is desired that e.g. the member of the first planetary gear set be kept stationary for a certain amount of time, such a stationary condition may be achieved by simply reducing the first fluid pressure, possibly down towards or to zero overpressure. Thus, the member of the first planetary gear set may be kept stationary without the need for operating a fluid pressure source, such as a pump. The same applies when keeping the member of the second planetary gear set stationary.

According to an example embodiment, the first locking mechanism may comprise a first biasing member, preferably a first spring arrangement, adapted to bias the first locking mechanism so as to assume the locked condition, and the second locking mechanism may comprise a second biasing member, preferably a second spring arrangement, adapted to bias the second locking mechanism so as to assume the locked condition. The above-mentioned biasing members imply a cost and energy efficient implementation of the locking mechanisms in order to obtain the desired characteristics thereof.

According to an example embodiment, the transmission housing cavity may contain a transmission lubrication liquid, wherein at least the external portion of each one of the first and second locking mechanisms is adapted to be in non-contact with the transmission lubrication liquid.

According to an example embodiment, the first locking mechanism may comprise a first brake disc and a first brake caliper, and the second locking mechanism may comprise a second brake disc and a second brake caliper. Hereby, a rapid and smooth changing between the gear stages is achieved while driving.

According to an example embodiment, the external portion of the first locking mechanism may comprise the first brake disc and the first brake caliper, and the external portion of the second locking mechanism may comprise the second brake disc and the second brake caliper. Thus, the first brake disc and the first brake caliper as well as the second brake disc and the second brake caliper may be kept outside, or on the outside of, the transmission housing, which implies that e.g. repair and maintenance operations may be performed in a straightforward manner.

According to an example embodiment, the gear selection arrangement may be adapted to assume a locked condition in which each of the first and second locking mechanisms assumes a locked condition. Hereby, and as indicated above, the first and second locking mechanisms can be used in an energy efficient manner as a parking brake.

According to a second aspect, there is provided a working machine comprising a front wheel axle connected to a pair of front wheels, and at least one rear wheel axle connected to at least one pair of rear wheels, and a driveline arrangement according to any one of the embodiments described above in relation to the first aspect, wherein the front wheel axle is connected to the second gear wheel and the at least one rear wheel axle is connected to the main shaft.

Effects and features of the second aspect of the present invention are largely analogous to those described above in relation to the first aspect of the present invention.

Further features of, and advantages with, the present invention will become apparent when studying the appended claims and the following description. The skilled person realize that different features of the present invention may be combined to create embodiments other than those described in the following, without departing from the scope of the present invention.

### BRIEF DESCRIPTION OF THE DRAWINGS

The above, as well as additional objects, features, and advantages of the present invention, will be better understood through the following illustrative and non-limiting detailed description of exemplary embodiments of the present invention, wherein:
Fig. 1 is a lateral side view illustrating a working machine in the form of an articulated hauler according to an example embodiment;
Figs. 2 - 8 schematically illustrate a driveline arrangement according to various example embodiments of the present invention,
Fig. 9 is a schematic illustration of a gear shifting arrangement of the driveline arrangement in Figs. 2 - 8 according to an example embodiment, and
Fig. 10 is a detailed schematic illustration of a gear selection arrangement for the gear shifting arrangement in Fig. 9 according to an example embodiment.

### DETAIL DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

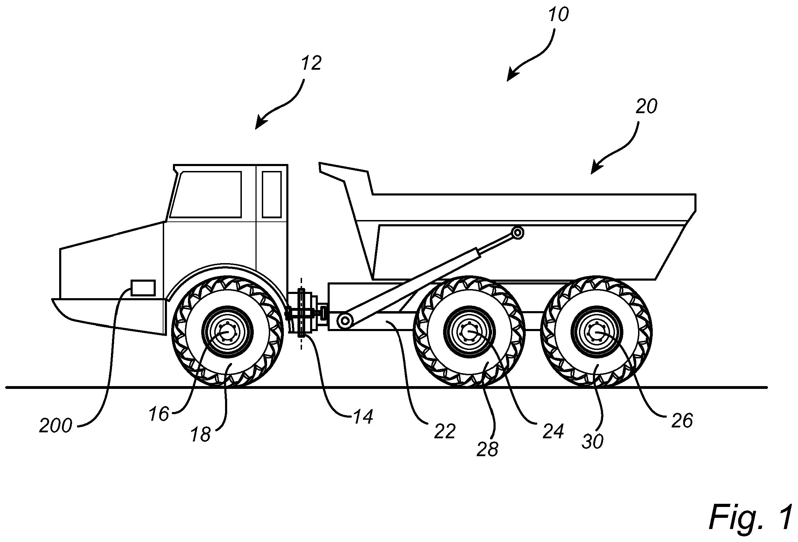

Reference is made to Fig. 1, which is a lateral side view illustrating a working machine according to an example embodiment. The Fig. 1 working machine 10 is exemplified as a frame-steered articulated hauler, also called dumper.

As can be seen from Fig. 1, the working machine 10 illustrated therein comprises a front working machine section 12 comprising a front frame 14 and a front wheel axle 16. The front axle 16 is in turn connected to one or more front ground engaging members 18 adapted to propel the working machine 10. In the Fig. 1 example, the one or more front ground engaging members 18 is exemplified as a pair of front wheels, although only the left front wheel is visible in Fig. 1.

Moreover, as seen in Fig. 1, the working machine 10 comprises a rear working machine section 20 comprising a rear frame 22, a front rear axle 24 and a back rear axle 26. The front rear axle 24 is connected to one or more front rear ground engaging members 28. Moreover, the back rear axle 26 is connected to one or more back rear ground engaging members 30. In the Fig. 1 embodiment, the one or more front rear ground engaging members 28 is exemplified as a pair of wheels. In a similar vein, the one or more back rear ground engaging members 30 is exemplified as a pair of wheels.

Although the Fig. 1 embodiment of the working machine 10 comprises two rear axles 24, 26, it is also envisaged that embodiments of the working machine may be equipped with only one rear axle (not shown). Furthermore, although the Fig. 1 embodiment exemplifies each one of the ground engaging members 18, 28, 30 as a wheel, it is also contemplated that in embodiments of the working machine 10, one or more of the ground engaging members 18, 28, 30 may comprise crawlers (not shown) or any other type of means for ground engagement. The working machine 10 further comprises an energy storage system 200. The energy storage system 200 is preferably a battery and can be configured to receive electrical power from the below described electric machine(s) or from a fuel cell (not shown). The battery may also be configured to receive electrical power from a power grid.

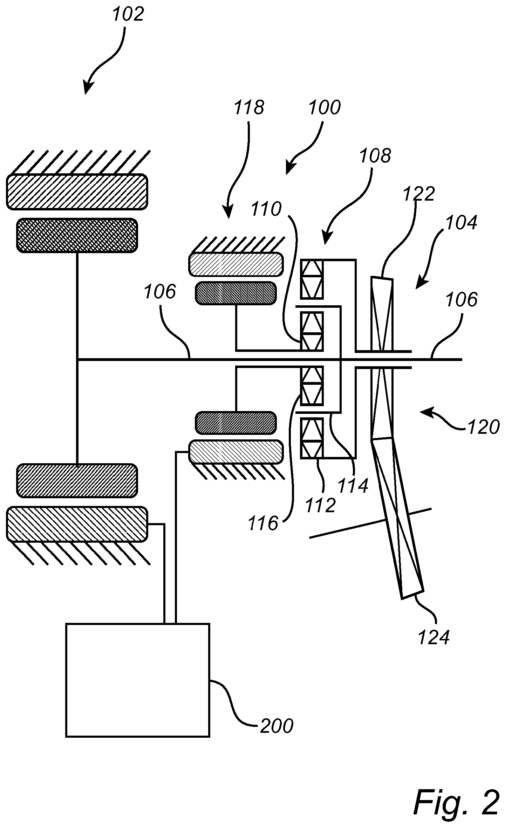

The Fig. 1 working machine 10 may be propelled by a driveline. With reference to Fig. 2, which schematically illustrates a driveline arrangement 100 according to an example embodiment. As can be seen in Fig. 2, the driveline arrangement 100 comprises a first electric machine 102 arranged to propel the working machine 10. The driveline arrangement 100 further comprises a continuously variable torque distribution arrangement 104. The continuously variable torque distribution arrangement 104 is configured to controllably direct a torque from the first electric machine 102 to the front wheel axle 16 (not shown in Fig. 2) and to at least one of the rear wheel axles 24, 26 (not shown in Fig. 2) of the working machine 10.

The continuously variable torque distribution arrangement 104 comprises a main shaft 106 connected to the first electric machine 102. The main shaft 106 is further connected to at least one of the rear wheel axles 24, 26. The continuously variable torque distribution arrangement 104 further comprises a primary planetary gear set 108 comprising a primary sun gear 110, a primary ring gear 112 and a primary planet carrier 114 carrying a set of planet gear units 116. The primary planetary gear set 108 is concentrically connected to the main shaft 106. The planet gear units 116 are in meshing engagement with the primary sun gear 110 and the primary ring gear 112. The primary planet carrier 114 is operatively connected to the main shaft 106. As is further depicted in Fig. 2, the continuously variable torque distribution arrangement 104 also comprises a second electric machine 118. The second electric machine 118 is connected to the primary sun gear 110 and arranged concentrically around the main shaft 106.

As can be seen in Fig. 2, the energy storage system 200 is connected to the first electric machine 102 as well as to the second electric machine 118. Hence, the first 102 and second 118 electric machines are both receiving electrical power from one and the same energy storage system 200.

For directing a torque to the front wheel axle 16, the continuously variable torque distribution arrangement 104 comprises a gear stage 120. The gear stage 120, which is exemplified as an angled gear stage 120, comprises a first gear wheel 122 operatively connected to the primary ring gear 112, and a second gear wheel 124 connectable to the front wheel axle 16, wherein the first gear wheel 122 is in meshing engagement with the second gear wheel 124.

By means of the exemplified driveline arrangement 100 in Fig. 2, the second electric machine 118 is configured to control the torque distribution between the front wheel axle 16 and at least one of the rear wheel axles 24, 26, as well as contributing to an electric propulsion of the front wheel axle 16 when the working machine 10 is turning. Preferably, the angled gear stage 120 has a gear ratio adapted for zero speed of the second electric machine 118 when the working machine 10 is driving straight ahead and the wheels 18, 28, 30 on the front 16 and rear wheel axles 24, 26 are rotating at the same speed. In such a case, the second electric machine 118 merely holds the primary sun gear 110 stationary with a required torque and substantially no additional power is needed. According to a non-limiting example, the gear stage 120 comprises a gear ratio of i = 1.5 to match a basic speed ratio R = -2 of the primary planetary gear set 108. This is derived from the formula i = (R-1) / R, valid for a planetary gear set with a stationary sun gear.

Furthermore, and as indicated above, the torque distribution between the front wheel axle 16 and at least one of the rear wheel axles 24, 26 is controlled by the continuously variable torque distribution arrangement 104. The following will present this torque distribution in further detail with non-limiting examples. When operating the driveline arrangement 100 and no torque is applied from the second electric machine 118, the primary planetary gear set 108 is not transferring any torque and all of the input torque from the first electric machine 102 is transmitted to the rear wheel axle(s) 24, 26. When a torque is applied by the second electric machine 118 to the primary sun gear 110, a torque equilibrium of the primary planetary gear set 108 results in that the primary planet carrier 114 subtracts torque from the rear axle(s) 24, 26 and adds torque via the primary ring gear 112 to the front wheel axle 16.

The torque ratio between primary ring gear 112 and primary sun gear 110 is determined by the basic speed ratio, referred to as R. According to a non-limiting example, if R= - 2 a primary ring gear torque is twice the primary sun gear torque, and the torques act in the same direction. These two torques balance the primary planet carrier torque.

As a non-limiting example, if the primary planet carrier 114 subtracts e.g. 60% of the input torque received from the first electric machine 102, and leaves 40% to the rear wheel axle(s) 24, 26, the 60% torque to the primary planet carrier 114 is split in 40% to the primary ring gear 112 and 20% to the primary sun gear 110. With a gear ratio i=1,5 of the angled gear step 120, the torque to the front wheel axle 16 will be 60% of the input torque from the first electric machine 102. So, in such a loss-free example, the 100% torque from the first electric machine 102 is distributed with 60% to the front wheel axle 16 and 40% to the rear wheel axle(s) 24, 26. For achieving this, the second electric machine 118 has to provide a torque which is 20% of the input torque from the first electric machine 102, if connected directly to the primary sun gear 110.

When the working machine 10 is turning, the wheels 18 on the front wheel axle 16 have to rotate faster, whereby additional power is delivered by the second electric machine 118. This is due to the fact that a turning radius R1 of the front wheel axle 16 is larger than the turning radius R2 of the rear wheel axle(s) 24, 26.

The larger steering angle α, the larger ratio R1/R2 and thus the larger ratio ω_{front wheel axle}/ω_{rear wheel axle(s)} that increases the speed of the second electric machine 118. The speed of the second electric machine may increase based on increased steering angle and/or increased working machine speed.

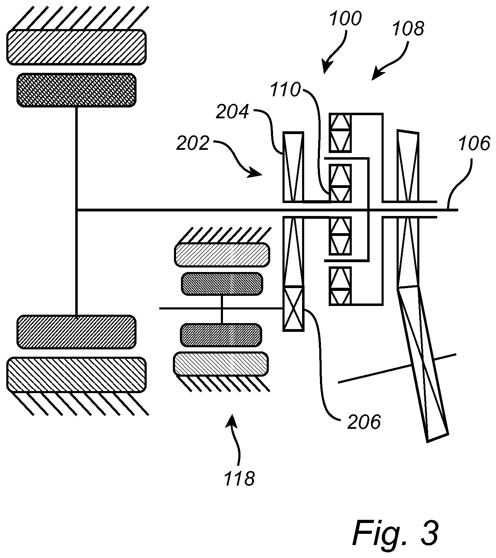

In order to describe another example embodiment of the driveline arrangement 100, reference is made to Fig. 3. The following will only describe the features of Fig. 3 that differs from the features of Fig. 2. It should thus be readily understood that, for example, the energy storage system 200 depicted in Fig. 2 is omitted from Fig. 3 but should be understood as included in the Fig. 3 embodiment as well as in all of the following described example embodiments.

The difference between the embodiment depicted in Fig. 3 and the embodiment depicted in Fig. 2 is that the Fig. 3 driveline arrangement 100 comprises an additional gear stage 202. The additional gear stage 202 comprises a first additional gear wheel 204 operatively connected to the primary sun gear 110, and a second additional gear wheel 206 operatively connected to the second electric machine 118. The first additional gear wheel 204 is in meshing engagement with the second additional gear wheel 206. The second electric machine 118 in Fig. 3 is thus not concentrically arranged around the main shaft 106 as is the case for the example embodiment depicted in Fig. 2.

The following will now describe the driveline arrangement 100 according to still further example embodiments. Each of the example embodiments described below illustrates the second electric machine 118 concentrically arranged around the main shaft 106. It should however be readily understood that the embodiment in Fig. 3 using the additional gear stage 202 is applicable also for each of the example embodiments described below. Further, the following will also only describe differences compared to already described example embodiments unless specified otherwise.

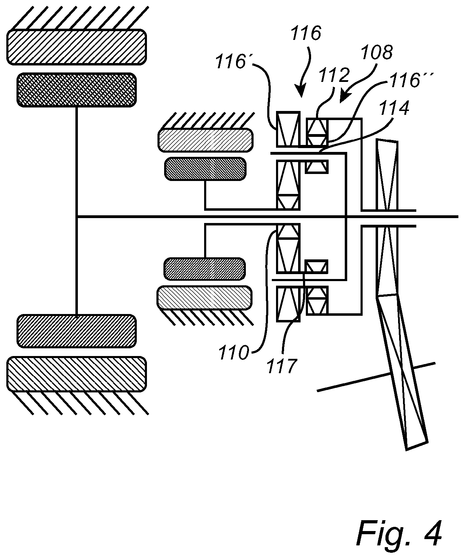

Turning now to Fig. 4, which schematically illustrates the driveline arrangement 100 according to another example embodiment. The difference between the example embodiment depicted in Fig. 4 and the example embodiment depicted in Figs. 2 and 3 is that each of the planet gear units 116 of the Fig. 4 embodiment comprises a first planet wheel 116' arranged in meshing engagement with the primary sun gear 110, and a second planet wheel 116" arranged in meshing engagement with the primary ring gear 112. Further, the first planet wheel 116' and the second planet wheel 116" are arranged on a common planet wheel shaft 117. Furthermore, and as can be seen in Fig. 4, the first planet wheel 116' has a larger diameter compared to the second planet wheel 116".

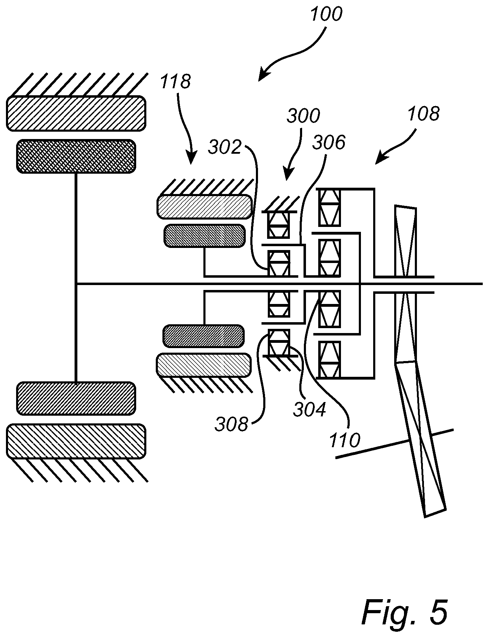

Turning to Fig. 5, which schematically illustrates the driveline arrangement 100 according to a still further example embodiment. As can be seen in Fig. 5, the driveline arrangement 100 comprises an additional planetary gear set 300 between the second electric machine 118 and the primary planetary gear set 108. In detail, the additional planetary gear set 300 comprises a sun gear 302, a ring gear 304 and a planet carrier 306 carrying a set of planet gears 308, wherein the planet gears 308 are in meshing engagement with the sun gear 302 and the ring gear 304. The sun gear 302 of the additional planetary gear set 300 is operatively connected to the second electric machine 118, and the planet carrier 306 of the additional planetary gear set 300 is operatively connected to the primary sun gear 110 of the primary planetary gear set 108, while the ring gear 304 of the additional planetary gear set 300 is stationary. Hereby, torque is transmitted from the second electric machine 118 to the primary sun gear 110 via the additional planetary gear set 300. More precisely, the torque from the second electric machine 118 is transmitted to the sun gear 302 of the additional planetary gear set 300, and via the planet carrier 306 of the additional planetary gear set 300, which planet carrier 306 rotates around the sun gear 302, to the primary sun gear 110.

Although Fig. 5 illustrates the additional planetary gear set 300 connected to the primary planetary gear set 108 of Fig. 2, it should be readily understood that the additional planetary gear set 300 can equally as well be connected to the primary planetary gear set 108 described above and depicted in Fig. 4.

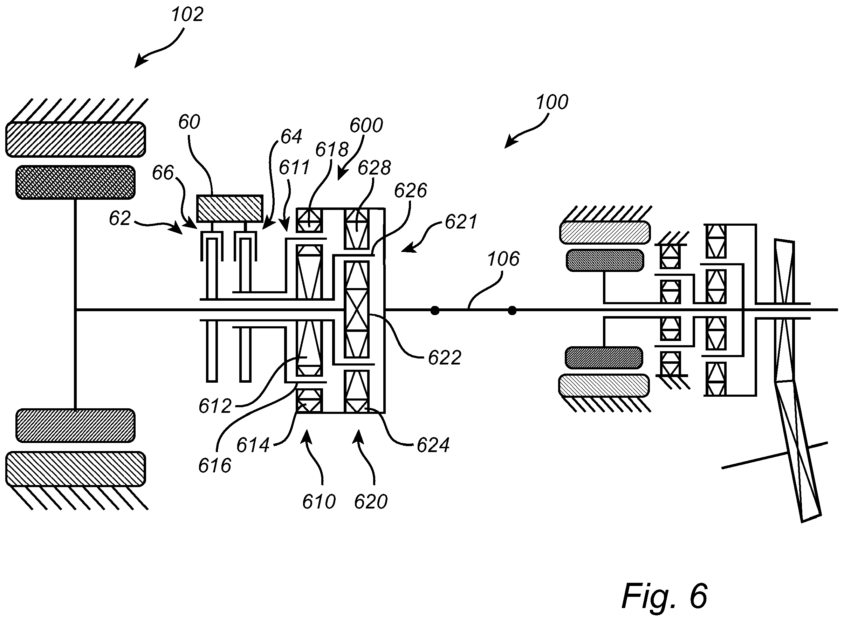

In order to describe the driveline arrangement 100 according to a still further example embodiment, reference is now made to Fig. 6. As can be seen in Fig. 6, the driveline arrangement 100 comprises a gear shifting arrangement 600 connected between the first electric machine 102 and the main shaft 106. The gear shifting arrangement 600 is thus configured to enable a set of gear stages between the first electric machine 102 and the main shaft 106.

The gear shifting arrangement 600 depicted in Fig. 6 comprises a first planetary gear set 610 and a second planetary gear set 620. The first planetary gear set 610 comprises a first set of planetary members 611. The first set of planetary members 611 comprises a first sun gear 612, a first ring gear 614 and a first planet carrier 616 carrying a first set of planet gears 618. The planet gears of the first set of planet gears 618 are in meshing engagement with the first sun gear 612 and the first ring gear 614. The second planetary gear set 620 comprises a second set of planetary members 621. The second set of planetary members 621 comprises a second sun gear 622, a second ring gear 624 and a second planet carrier 626 carrying a second set of planet gears 628. The planet gears of the second set of planet gears 628 are in meshing engagement with the second sun gear 622 and the second ring gear 624.

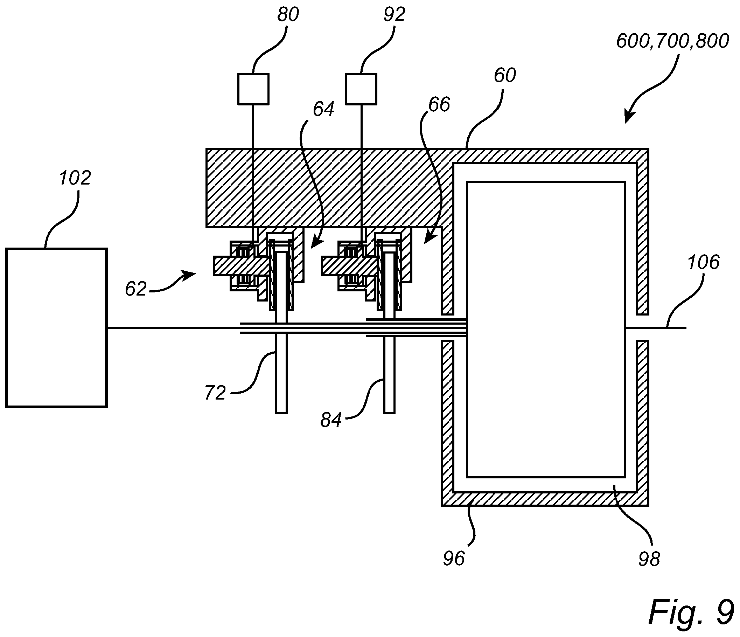

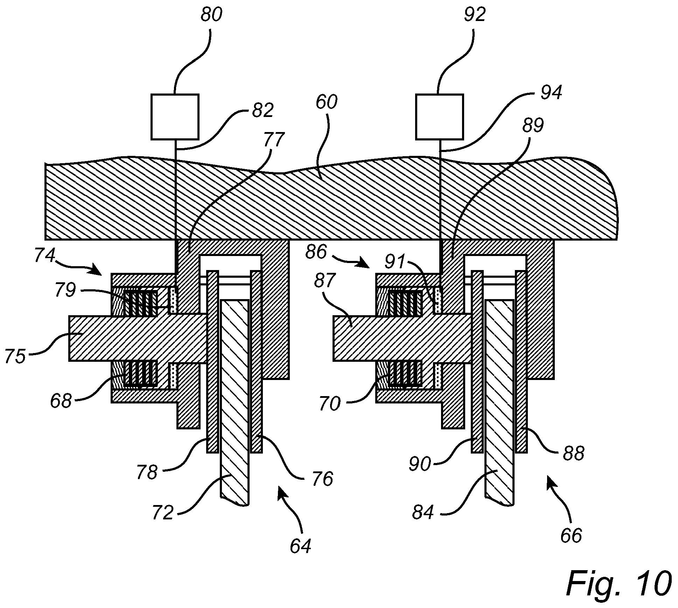

As is further illustrated in Fig. 6, the gear shifting arrangement 600 further comprises a gear selection arrangement 62 arranged for obtaining the above described set of gear stages between the first electric machine 102 and the main shaft 106. The gear selection arrangement 62 will be described in detail below with reference to Figs. 9 and 10 and comprises a first locking mechanism 64 and a second locking mechanism 66, where each of the first 64 and second 66 locking mechanisms are connected to a transmission housing 60. As is evidently understood, each of the first 64 and second 66 locking mechanisms may be arranged in an open condition and in a closed condition.

In the exemplified example embodiment of Fig. 6, the first sun gear 612 is operatively connected to the second planet carrier 626, the first ring gear 614 is operatively connected to the second ring gear 624, wherein the first 614 and second 624 ring gears are connected to the main shaft 106. The second sun gear 622 is connected to the first electric machine 102, the first locking mechanism 64 is connected to the first planet carrier 616, and the second locking mechanism 66 is connected to the second planet carrier 626 and to the first sun gear 612.

By means of the gear shifting arrangement 600 depicted in Fig. 6 and described above, a two gear stage transmission is provided. The gear shifting arrangement 600 can assume two gear stages, where the first gear stage is obtained by solely locking the first locking mechanism 64 to the transmission housing 60, and the second gear stage is obtained by solely locking the second locking mechanism 66 to the transmission housing 60. In the first gear stage, the first planet carrier 616 is kept stationary, while the first sun gear 612 and the second planet carrier 626 are kept stationary when assuming the second gear stage. The first 64 and second 66 locking mechanisms may be arranged in a slipping condition as well as arranged as a parking brake, which will be described in further detail below with reference to Figs. 9 and 10.

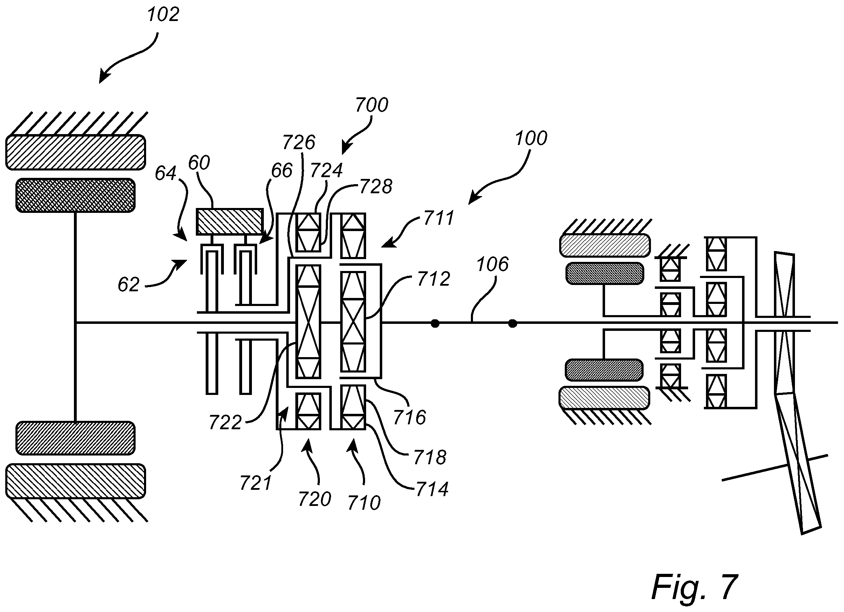

Turning to Fig. 7, which illustrates the gear shifting arrangement 700 according to another example embodiment. The gear shifting arrangement 700 depicted in Fig. 7 comprises a first planetary gear set 710 and a second planetary gear set 720. The first planetary gear set 710 comprises a first set of planetary members 711. The first set of planetary members 711 comprises a first sun gear 712, a first ring gear 714 and a first planet carrier 716 carrying a first set of planet gears 718. The planet gears of the first set of planet gears 718 are in meshing engagement with the first sun gear 712 and the first ring gear 714. The second planetary gear set 720 comprises a second set of planetary members 721. The second set of planetary members 721 comprises a second sun gear 722, a second ring gear 724 and a second planet carrier 726 carrying a second set of planet gears 728. The planet gears of the second set of planet gears 728 are in meshing engagement with the second sun gear 722 and the second ring gear 724.

As is further illustrated in Fig. 7, the gear shifting arrangement 700 further comprises the above described gear selection arrangement 62 arranged for obtaining the above described set of gear stages between the first electric machine 102 and the main shaft 106. As also described above, the gear selection arrangement 62 comprises a first locking mechanism 64 and a second locking mechanism 66, where each of the first 64 and second 66 locking mechanisms are connected to a transmission housing 60.

In the exemplified example embodiment of Fig. 7, the first sun gear 712 is operatively connected to the second sun gear 722, wherein the first 712 and second 722 sun gears are connected to the first electric machine 102. The first ring gear 714 is operatively connected to the second planet carrier 726, wherein the first ring gear 714 and the second planet carrier 726 are connected to the first locking mechanism 64. The second ring gear 724 is connected to the second locking mechanism 66, and the first planet carrier 716 is connected to the main shaft 106.

By means of the gear shifting arrangement 700 depicted in Fig. 7 and described above, a two gear stage transmission according to another example embodiment is provided. The gear shifting arrangement 700 can assume two gear stages, where the first gear stage is obtained by solely locking the first locking mechanism 64 to the transmission housing 60, and the second gear stage is obtained by solely locking the second locking mechanism 66 to the transmission housing 60. In the first gear stage, the first ring gear 714 and the second planet carrier 726 are kept stationary, while the second ring gear 724 is kept stationary when assuming the second gear stage. Also for the example embodiment described in relation to Fig. 7, the first 64 and second 66 locking mechanisms may be arranged in a slipping condition as well as arranged as a parking brake, which will be described in further detail below with reference to Figs. 9 and 10.

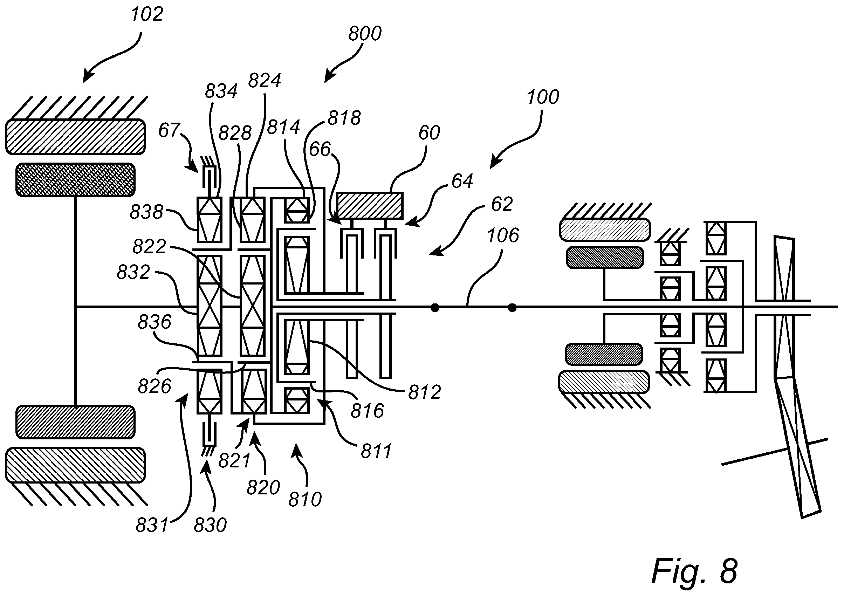

In order to describe a gear shifting arrangement according to a still further example embodiment, reference is now made to Fig. 8. The gear shifting arrangement 800 depicted in Fig. 8 comprises a first planetary gear set 810, a second planetary gear set 820 and a third planetary gear set 830. The first planetary gear set 810 comprises a first set of planetary members 811. The first set of planetary members 811 comprises a first sun gear 812, a first ring gear 814 and a first planet carrier 816 carrying a first set of planet gears 818. The planet gears of the first set of planet gears 818 are in meshing engagement with the first sun gear 812 and the first ring gear 814. The second planetary gear set 820 comprises a second set of planetary members 821. The second set of planetary members 821 comprises a second sun gear 822, a second ring gear 824 and a second planet carrier 826 carrying a second set of planet gears 828. The planet gears of the second set of planet gears 828 are in meshing engagement with the second sun gear 822 and the second ring gear 824. Finally, the third planetary gear set 830 comprises a third set of planetary members 831. The third set of planetary members 831 comprises a third sun gear 832, a third ring gear 834 and a third planet carrier 836 carrying a third set of planet gears 838. The planet gears of the third set of planet gears 838 are in meshing engagement with the third sun gear 832 and the third ring gear 834.

As is further illustrated in Fig. 8, the gear shifting arrangement 800 further comprises a gear selection arrangement 62 arranged for obtaining a set of gear stages between the first electric machine 102 and the main shaft 106. Compared to the gear selection arrangement depicted in Figs. 6 and 7, the gear selection arrangement 62 in Fig. 8 comprises, in addition to the first 64 and second 66 locking mechanisms, a third locking mechanism 67. The first 64, second 66 and third 67 locking mechanisms are each connected to the transmission housing 60.

In the exemplified example embodiment of Fig. 8, the first ring gear 814 is operatively connected to the second planet carrier 826, the first sun gear 812 is operatively connected to the second ring gear 824 and to the third planet carrier 836. The second sun gear 822 is operatively connected to the third sun gear 832, the second 822 and third 832 sun gears are connected to the first electric machine 102, and the first ring gear 814 and the second planet carrier 826 are connected to the main shaft 106.

Furthermore, the first locking mechanism 64 is connected to the first planet carrier 816, the second locking mechanism 66 is connected to the second ring gear 824, and the third locking mechanism 67 is connected to the third ring gear 834.

By means of the gear shifting arrangement 800 depicted in Fig. 8 and described above, a three gear stage transmission is provided. The gear shifting arrangement 800 can assume three gear stages, where the first gear stage is obtained by solely locking the first locking mechanism 64 to the transmission housing 60, the second gear stage is obtained by solely locking the second locking mechanism 66 to the transmission housing 60, and the third gear stage is obtained by solely locking the third locking mechanism 67 to the transmission housing 60. In the first gear stage, the first planet carrier 816 is kept stationary, in the second gear stage, the second ring gear 824 is kept stationary, and in the third gear stage, the third ring gear 834 is kept stationary. In a similar vein as described above, the first 64 and second 66 locking mechanisms may be arranged in a slipping condition as well as arranged as a parking brake, which will be described in further detail below with reference to Figs. 9 and 10.

In order to describe the gear shifting arrangement of Figs. 6 - 8 in further detail, reference is now made to Fig. 9 which is a schematic side view of a gear shifting arrangement of the above described driveline arrangement according to an example embodiment. For simplifying the understanding of the following description, the third locking mechanism 67 of the Fig. 8 embodiment has been omitted. The following will thus focus on the first 64 and second 66 locking mechanisms of the above described gear selection arrangement 62, where the first 64 and second 66 locking mechanisms are defined as connected to a member of the planetary gear sets, which specific members are detailed in the above description of Figs. 6-8. Also, the planetary gear sets of the gear shifting arrangements 600, 700, 800 are schematically illustrated by a box.

The first locking mechanism 64 is adapted to be controlled by a first fluid pressure conducted to the first locking mechanism 64 such that for at least a first fluid pressure equal to zero overpressure, the first locking mechanism 64 is adapted to assume a locked condition in which the planetary member connected to the first locking mechanism 64 is locked to the transmission housing 60.

As described above, the gear selection arrangement 62 also comprises a second locking mechanism 66 connected to a member of the planetary gear sets. The second locking mechanism 66 is adapted to be controlled by a second fluid pressure conducted to the second locking mechanism 66 such that for at least a second fluid pressure equal to zero overpressure, the second locking mechanism 66 is adapted to assume a locked condition in which the planetary member connected to the second locking mechanism 66 is locked to the transmission housing 60.

Furthermore, and purely by way of example, the implementation of the gear selection arrangement 62 is such that the first locking mechanism 64 is further adapted to assume a set of first locking mechanism non-locked conditions in which the planetary member connected to the first locking mechanism 64 is allowed to rotate relative to the transmission housing 60, and wherein the second locking mechanism 66 is further adapted to assume a set of second locking mechanism non-locked conditions in which the planetary member connected to the second locking mechanism 66 is allowed to rotate relative to the transmission housing, whereby for a first fluid pressure equal to or higher than a first fluid pressure threshold, the planetary member connected to the first locking mechanism 64 is adapted to assume a released condition in which the planetary member is free to rotate relative to the transmission housing 60, wherein the released condition is forming part of the set of first locking mechanism non-locked conditions. Also, for at least one first intermediate pressure between zero overpressure and the first fluid pressure threshold, the first locking mechanism 64 is adapted to assume a slipping condition in which a relative rotation is allowed but braking torque is applied between the transmission housing 60 and the planetary member, wherein the slipping condition is forming part of the set of first locking mechanism non-locked conditions. Moreover, for a second fluid pressure equal to or higher than a second fluid pressure threshold, the second locking mechanism 66 is adapted to assume a released condition in which the planetary member connected to the second locking mechanism 66 is free to rotate relative to the transmission housing 60, wherein the released condition is forming part of the set of second locking mechanism non-locked conditions. Also, for at least one second intermediate pressure between zero overpressure and the second fluid pressure threshold, the second locking mechanism 66 is adapted to assume a slipping condition in which a relative rotation is allowed but braking torque is applied between the transmission housing 60 and the planetary member, wherein the slipping condition is forming part of the set of second locking mechanism non-locked conditions.

The first locking mechanism 64 may be implemented in a plurality of ways. Purely by way of example, the first locking mechanism 64 may be implemented as an on-off locking mechanism, such as a dog clutch, adapted to assume either a fully locked or a fully released condition. As such, though purely by way of example, the set of first locking mechanism non-locked conditions may contain only one non-locked condition, i.e. a fully released condition as exemplified above.

In a similar vein, the second locking mechanism 66 may be implemented in a plurality of ways. Purely by way of example, the second locking mechanism 66 may be implemented as an on-off locking mechanism, such as a dog clutch, adapted to assume either a fully locked or a fully released condition. As such, though purely by way of example, the set of second locking mechanism non-locked conditions may contain only one non-locked condition, i.e. a fully released condition as exemplified above.

Furthermore, each one of the first locking mechanism 64 and the second locking mechanism 66 may preferably be arranged as a parking brake. As such, each one of the first 64 and second 66 locking mechanisms may be implemented such that it assumes a locked condition at least when a fluid pressure conducted to the locking mechanism is equal to zero overpressure.

Implementations of the first 64 and second 66 locking mechanisms are hereinafter presented with reference to Fig. 10 which illustrates a portion of the example embodiment depicted in Fig. 9. As may be gleaned from Fig. 10, the first locking mechanism 64 comprises a first biasing member 68, which first biasing member 68 is implemented as a first spring arrangement in Fig. 10, adapted to bias the first locking mechanism 64 so as to assume the locked condition and wherein the second locking mechanism 66 comprises a second biasing member 70, which second biasing member 70 is implemented as a second spring arrangement in Fig. 10, adapted to bias the second locking mechanism 66 so as to assume the locked condition.

In the Fig. 10 implementation, the first biasing member 68 is implemented as a disc spring, although other types of biasing members are also envisaged, such as a helical spring or the like. In a similar vein, in the Fig. 10 implementation, the second biasing member 70 is implemented as a disc spring, although other types of biasing members are also envisaged, such as a helical spring or the like.

In the Fig. 10 implementation, the first locking mechanism 64 comprises a first brake disc 72 and a first brake caliper 74. The first brake caliper 74 includes a first caliper body 77 that holds two brake pads 76, 78 located on opposite sides of the first brake disc 72. A first piston 75 is positioned within the first caliper body 77. The first piston 75 is biased in a direction towards the first brake disc 72 by means of the first biasing member 68 to thereby bias the brake pad 78 towards the first brake disc 72. Purely by way of example, in order to apply a braking torque to the first brake disc 72, the first brake caliper 74 may be fixedly connected to the transmission housing 60 in at least the direction of the needed reaction force.

Moreover, the Fig. 10 implementation of the first brake caliper 74 is a so called floating caliper. As such, the Fig. 10 implementation of the first brake caliper 74 can move with respect to the first brake disc 72, along a line parallel to the axis of rotation of the first brake disc 72. Thus, when the first biasing member 68 has pushed one of the brake pads 78, via the first piston 75, such that it makes contact with the first brake disc 72, the first caliper body 77 then slides and pulls the other brake pad 76 so that pressure is applied to both sides of the first brake disc 72.

However, it should be noted that other implementations are also envisaged. Purely by way of example, the implementations of the first locking mechanism 64 may comprise two biasing members (not shown), each one of which being adapted to bias an individual brake pad 76, 78 towards the first brake disc 72. As such, the first brake caliper 74 need not necessarily be a so called floating caliper.

The first brake caliper 74 is in turn connected to a first fluid source 80, for instance via a fluid conduit 82 as exemplified in Fig. 10. Purely by way of example, the first fluid source 80 may be a tank or a pump and the fluid may for instance be a gas, such as air, or a liquid, such as a hydraulic fluid, for instance hydraulic oil. In the Fig. 10 implementation, the first brake caliper 74 controls the two brake pads 76, 78 such that when the first brake caliper 74 is fed with fluid having a fluid pressure from the fluid source 80, the first brake caliper 74 releases the two brake pads 76, 78 from contact with the first brake disc 72.

In the Fig. 10 implementation of the first locking mechanism 64, the first fluid source 80 is fluidly connected to a first fluid cavity 79 formed between the first piston 75 and the first caliper body 77. As such, a fluid pressure applied in the first fluid cavity 79 will impart a force onto the first piston 75 in a direction opposite to the force generated by the first biasing member 68, thus forcing the two brake pads 76, 78 away from each other.

In the Fig. 10 implementation, the first biasing member 68 and the first fluid pressure applied in the first fluid cavity 79 interact such that for at least a first fluid pressure equal to zero overpressure, the first locking mechanism 64 is adapted to assume the above-mentioned locked condition. In such a condition, the biasing force from the first biasing member 68 exceeds the force by which the first fluid pressure releases the two brake pads 76, 78 from the first brake disc 72. It should also be noted that the first locking mechanism 64 may be adapted to assume the above-mentioned locked condition also when a first fluid pressure is greater than zero overpressure.

Furthermore, for a first fluid pressure equal to or higher than the first fluid pressure threshold, the first locking mechanism 64 is adapted to assume a released condition in which the planetary member connected to the first locking mechanism 64 is free to rotate relative to the transmission housing 60. In such a condition, the biasing force from the first biasing member 68 does not exceed the force by which the first fluid pressure releases the two brake pads 76, 78 from the first brake disc 72 such that there is no contact between the first brake disc 72 and any one of the brake pads 76, 78.

Still further, for at least one first intermediate pressure between zero overpressure and the first fluid pressure threshold, the first locking mechanism 64 is adapted to assume a slipping condition in which a relative rotation is allowed but braking torque is applied between the transmission housing 60 and the planetary member. In a slipping condition, there is contact between the first brake disc 72 and at least one of, preferably both, the brake pads 76, 78 but wherein the first brake disc 72 nevertheless is allowed to rotate relative to the brake pads 76, 78.

In a similar vein as for the first locking mechanism 64, in the Fig. 10 implementation, the second locking mechanism 66 comprises a second brake disc 84 and a second brake caliper 86. The second brake caliper 86 includes a second caliper body 89 that holds two brake pads 88, 90 located on opposite sides of the second brake disc 84. A second piston 87 is positioned within the second caliper body 89. The second piston 87 is biased in a direction towards the second brake disc 84 by means of the second biasing member 70 to thereby bias the brake pad 90 towards the second brake disc 84. Purely by way of example, in order to apply a braking torque to the second brake disc 84, the second brake caliper 86 may be fixedly connected to the transmission housing 60 in at least the direction of the needed reaction force.

Moreover, the Fig. 10 implementation of the second brake caliper 86 is a so called floating caliper. As such, the Fig. 10 implementation of the second brake caliper 86 can move with respect to the second brake disc 84, along a line parallel to the axis of rotation of the second brake disc 84. As such, when the second biasing member 70 has pushed one of the brake pads 90, via the second piston 87, such that it makes contact with the second brake disc 84, the second caliper body 89 then slides and pulls the other brake pad 88 so that pressure is applied to both sides of the second brake disc 84.

However, it should be noted that other implementations are also envisaged. Purely by way of example, the implementations of the second locking mechanism 66 may comprise two biasing members (not shown), each one of which being adapted to bias an individual brake pad towards the second brake disc 84. As such, the second brake caliper 86 need not necessarily be a so called floating caliper.

The second brake caliper 86 is in turn connected to a second fluid source 92, for instance via a fluid conduit 94 as exemplified in Fig. 10. Purely by way of example, the second fluid source 92 may be a tank or a pump and the fluid may for instance be a gas, such as air, or a liquid, such as a hydraulic fluid, for instance hydraulic oil.

In the Fig. 10 implementation of the second locking mechanism 66, the second fluid source 92 is fluidly connected to a second fluid cavity 91 formed between the second piston 87 and the second caliper body 89. As such, a fluid pressure applied in the second fluid cavity 91 will impart a force onto the second piston 87 in a direction opposite to the force generated by the second biasing member 70, thus releasing the two brake pads 88, 90 from contact with the second brake disc 84.

Although the first 80 and second 92 fluid sources are illustrated as separate entities in Fig. 10, it is also envisaged that the embodiments of the gear shifting arrangement 600, 700, 800 may comprise a single fluid source feeding fluid to each one of the first 64 and second 66 locking mechanisms.

In the Fig. 10 implementation, the second brake caliper 86 controls the two brake pads 88, 90 such that when the second brake caliper 86 is fed with fluid having a fluid pressure from the fluid source 92, the second brake caliper 86 forces the two brake pads 88, 90 away from each other.

In the Fig. 10 implementation, the second biasing member 70 and the second fluid pressure applied in the second fluid cavity 91 interact such that for at least a second fluid pressure equal to zero overpressure, the second locking mechanism 66 is adapted to assume a locked condition in which the planetary member connected to the second locking mechanism 66 is locked to the transmission housing 60. In such a condition, the biasing force from the second biasing member 70 exceeds the force by which the second fluid pressure releases the two brake pads 88, 90 from contact with the second brake disc 84. It should also be noted that the second locking mechanism 66 may be adapted to assume the above-mentioned locked condition also when a second fluid pressure is greater than zero overpressure.

Furthermore, for a second fluid pressure equal to or higher than a second fluid pressure threshold, the second locking mechanism 66 is adapted to assume a released condition in which the planetary member is free to rotate relative to the transmission housing 60. In such a condition, the biasing force from the second biasing member 70 does not exceed the force by which the second fluid pressure releases the two brake pads 88, 90 from contact with the second brake disc 84 such that there is no contact between the second brake disc 84 and any one of the brake pads 88, 90.

Still further, for at least one second intermediate pressure between zero overpressure and the second fluid pressure threshold, the second locking mechanism 66 is adapted to assume a slipping condition in which a relative rotation is allowed but braking torque is applied between the transmission housing 60 and the planetary member. In a slipping condition, there is contact between the second brake disc 84 and at least one of, preferably both, the brake pads 88, 90 but wherein the second brake disc 84 nevertheless is allowed to rotate relative to the brake pads 88, 90.

Moreover, again with reference to Fig. 9, in embodiments of the gear shifting arrangement 600, 700, 800, the transmission housing 60 may comprise a transmission housing wall assembly 96 defining a transmission housing cavity 98 enclosing the planetary gear sets described in relation to Figs. 6 - 8. Moreover, as indicated in Fig. 9, in embodiments of the gear shifting arrangement 600, 700, 800, at least an external portion of each one of the first 64 and second 66 locking mechanisms is located on one side of the transmission housing wall assembly 96 and the transmission housing cavity 98 is located on an opposite side of the transmission housing wall assembly.

Purely by way of example, and as indicated in Fig. 10, the external portion of the first locking mechanism 64 may comprise the first brake disc 72 and the first brake caliper 74 and the external portion of the second locking mechanism 66 may comprise the second brake disc 84 and the second brake caliper 86.

Moreover, the transmission housing cavity 98 may contain a transmission lubrication liquid (not shown in Fig. 9), wherein at least the external portion of each one of the first and second locking mechanisms 64, 66 is adapted not to be in contact with the transmission lubrication liquid.

By means of the above described gear shifting arrangement, and as indicated above, the gear selection arrangement 62 may be adapted to assume a locked condition in which the first locking mechanism 64 assumes the locked condition and the second locking mechanism 66 assumes the locked condition. In the locked condition, the gear shifting arrangement will prevent the main shaft 106 from rotating. As such, the locked condition may be used for preventing the set of ground engaging members 28, 30 from rotating, such that the gear shifting arrangement then acts as a parking brake.

It is to be understood that the present invention is not limited to the embodiments described above and illustrated in the drawings; rather, the skilled person will recognize that many changes and modifications may be made within the scope of the appended claims. For example, although the present invention has mainly been described in relation to an articulated hauler, the invention should be understood to be equally applicable for any type of working machines.

## Claims

1. A driveline arrangement (100) for a working machine (10), the driveline arrangement comprising:
- a first electric machine (102) arranged to propel the working machine, and
- a continuously variable torque distribution arrangement (104) configured to controllably distribute a torque from the first electric machine (102) between a front wheel axle (16) and at least one rear wheel axle (26, 28) of the working machine, the continuously variable torque distribution arrangement comprising
- a main shaft (106) connectable to the first electric machine (102) and to the at least one rear wheel axle (26, 28),
- a primary planetary gear set (108) comprising a primary sun gear (110), a primary ring gear (112) and a primary planet carrier (114) carrying a set of planet gear units (116), wherein the planet gear units are in meshing engagement with the primary sun gear and the primary ring gear, and
- a second electric machine (118) connected to the primary sun gear (110),
**characterized in that** the continuously variable torque distribution arrangement further comprises a gear stage (120) comprising a first gear wheel (122) operatively connected to the primary ring gear (112), and a second gear wheel (124) connectable to the front wheel axle, the first gear wheel being in meshing engagement with the second gear wheel, wherein the primary planet carrier is operatively connected to the main shaft, and
wherein the torque distribution between the front wheel axle (16) and the at least one rear wheel axle (26, 28) is controlled based on a torque applied on the primary sun gear by the second electric machine (118).

2. The driveline arrangement (100) according to claim 1, further comprising an energy storage system (200) electrically connected to the first and second electric machines to supply electric power to the first and second electric machines.

3. The driveline arrangement (100) according to any one of claims 1 or 2, wherein the primary planetary gear set (108) is concentrically connected to the main shaft (106).

4. The driveline arrangement (100) according to any one of the preceding claims, wherein each one of the planet gear units (116) of the set of planet gear units comprises a first planet wheel (116') arranged in meshing engagement with the primary sun gear (110), and a second planet wheel (116") arranged in meshing engagement with the primary ring gear (112), the first planet wheel and the second planet wheel being arranged on a common planet wheel shaft (117).

5. The driveline arrangement (100) according to any one of the preceding claims, wherein the driveline arrangement further comprises a gear shifting arrangement (600) connected between the first electric machine (102) and the main shaft (106).

6. The driveline arrangement (100) according to claim 5, wherein the gear shifting arrangement (600) comprises
- a first planetary gear set (610, 810) comprising a first set of planetary members (611, 811), the first set of planetary members comprising a first sun gear (612, 812), a first ring gear (614, 814) and a first planet carrier (616, 816) carrying a first set of planet gears (618, 818), wherein the planet gears of the first set of planet gears are in meshing engagement with the first sun gear and the first ring gear,
- a second planetary gear set (620, 820) comprising a second set of planetary members (621, 821), the second set of planetary members comprising a second sun gear (622, 822), a second ring gear (624, 824) and a second planet carrier (626, 826) carrying a second set of planet gears (628, 828), wherein the planet gears of the second set of planet gears are in meshing engagement with the second sun gear and the second ring gear, at least one member of the first planetary gear set being operatively connected to a member of the second planetary gear set, wherein one member of the first planetary gear set is connected to the main shaft, and one member of the second planetary gear set is connected to the first electric machine, and
- a gear selection arrangement (62), comprising
- a first locking mechanism (64) connected to a member of the first planetary gear set (610, 810), and
- a second locking mechanism (66) connected to a member of the second planetary gear set (620, 820).

7. The driveline arrangement (100) according to claim 6, wherein
- the first sun gear (612) is operatively connected to the second planet carrier (626),
- the first ring gear (614) is operatively connected to the second ring gear (624),
- the second sun gear (622) is connected to the first electric machine (102),
- the first ring gear (614) and the second ring gear (624) are connected to the main shaft (106),
- the first locking mechanism (64) is connected to the first planet carrier (616), and
- the second locking mechanism (66) is connected to the second planet carrier (626) and to the first sun gear (612).

8. The driveline arrangement (100) according to claim 6, wherein
- the first sun gear (612) is operatively connected to the second sun gear (622),
- the first ring gear (614) is operatively connected to the second planet carrier (626),
- the first (612) and second (624) sun gears are connected to the first electric machine (102),
- the first planet carrier (616) is connected to the main shaft (106),
- the first locking mechanism (64) is connected to the first ring gear (614) and to the second planet carrier (626), and
- the second locking mechanism (66) is connected to the second ring gear (624).

9. The driveline arrangement (100) according to claim 6, wherein the gear shifting arrangement further comprises
- a third planetary gear set (830) comprising a third set of planetary members, the third set of planetary members comprising a third sun gear (832), a third ring gear (834) and a third planet carrier (836) carrying a third set of planet gears (838),
wherein the planet gears of the third set of planet gears are in meshing engagement with the third sun gear and the third ring gear, wherein at least one member of the third planetary gear set is operatively connected to a member of the second planetary gear set, and wherein the gear selection arrangement further comprises
- a third locking mechanism (67) connected to a member of the third planetary gear set (830).

10. The driveline arrangement (100) according to claim 9, wherein
- the first ring gear (814) is operatively connected to the second planet carrier (826),
- the first sun gear (812) is operatively connected to the second ring gear (824) and to the third planet carrier (836),
- the second sun gear (822) is operatively connected to the third sun gear (832),
- the second (822) and third (832) sun gears are connected to the first electric machine (102),
- the first ring gear (814) and the second planet carrier (826) are connected to the main shaft (106),
- the first locking mechanism (64) is connected to the first planet carrier (816),
- the second locking mechanism (66) is connected to the second ring gear (824) and to the first sun gear (812) and to the third planet carrier (836), and
- the third locking mechanism (67) is connected to the third ring gear (834).

11. The driveline arrangement (100) according to any one of claims 6 - 10, wherein the gear shifting arrangement comprises a transmission housing (60), the transmission housing comprising a housing wall assembly (96) defining a transmission housing cavity (98) enclosing at least the first and second planetary gear sets, wherein at least an external portion of each one of the first (64) and second (66) locking mechanisms is located on one side of the transmission housing wall assembly and the transmission housing cavity is located on an opposite side of the transmission housing wall assembly.

12. The driveline arrangement (100) according to claim 11, wherein
- the first locking mechanism is adapted to be controlled by a first fluid pressure conducted to the first locking mechanism such that:
- for at least a first fluid pressure equal to zero overpressure, the first locking mechanism is adapted to assume a locked condition in which the member of the first planetary gear set is locked to the transmission housing, and
- the second locking mechanism is adapted to be controlled by a second fluid pressure conducted to the second locking mechanism such that:
- for at least a second fluid pressure equal to zero overpressure, the second locking mechanism is adapted to assume a locked condition in which the member of the second planetary gear set is locked to the transmission housing.

13. The driveline arrangement (100) according to claim 12, wherein the first locking mechanism comprises a first biasing member, preferably a first spring arrangement, adapted to bias the first locking mechanism so as to assume the locked condition, and wherein the second locking mechanism comprises a second biasing member, preferably a second spring arrangement, adapted to bias the second locking mechanism so as to assume the locked condition.

14. The driveline arrangement (100) according to any one of claims 6 - 13, wherein the first locking mechanism (64) comprises a first brake disc (72) and a first brake caliper (74), and the second locking mechanism (66) comprises a second brake disc (84) and a second brake caliper (86).

15. The driveline arrangement (100) according to claim 14 when dependent on any one of claims 11 - 13, wherein the external portion of the first locking mechanism (64) comprises the first brake disc (72) and the first brake caliper (74), and wherein the external portion of the second locking mechanism (66) comprises the second brake disc (84) and the second brake caliper (86).

16. The driveline arrangement (100) according to any one of claims 6 - 15, wherein the gear selection arrangement is adapted to assume a locked condition in which each of the first and second locking mechanisms assumes a locked condition.

17. A working machine (10) comprising a front wheel axle connected to a pair of front wheels, and at least one rear wheel axle connected to at least one pair of rear wheels, and a driveline arrangement according to any one of the preceding claims, wherein the front wheel axle is connected to the second gear wheel and the at least one rear wheel axle is connected to the main shaft.

## Patentansprüche

1. Kraftübertragungsanordnung (100) für eine Arbeitsmaschine (10), die Kraftübertragungsanordnung umfassend:
- eine erste Elektromaschine (102), die angeordnet ist, um die Arbeitsmaschine anzutreiben, und
- eine stufenlos verstellbare Drehmomentverteilungsanordnung (104), die konfiguriert ist, um ein Drehmoment von der ersten Elektromaschine (102) zwischen einer Vorderradachse (16) und mindestens einer Hinterradachse (26, 28) der Arbeitsmaschine steuerbar zu verteilen, die stufenlos verstellbare Drehmomentverteilungsanordnung umfassend
- eine Hauptwelle (106), die mit der ersten Elektromaschine (102) und mit der mindestens einen Hinterradachse (26, 28) verbunden werden kann,
- ein primäres Planetengetriebe (108), das ein primäres Sonnenrad (110), ein primäres Hohlrad (112) und einen primären Planetenträger (114) umfasst, der einen Satz von Planetenradeinheiten (116) trägt, wobei die Planetenradeinheiten mit dem primären Sonnenrad und dem primären Hohlrad in Verzahnungseingriff stehen, und
- eine zweite Elektromaschine (118), die mit dem primären Sonnenrad (110) verbunden ist,
**dadurch gekennzeichnet, dass** die stufenlos verstellbare Drehmomentverteilungsanordnung ferner eine Gangstufe (120) umfasst, die ein erstes Zahnrad (122), das betriebsmäßig mit dem primären Hohlrad (112) verbunden ist, und ein zweites Zahnrad (124) umfasst, das mit der Vorderradachse verbunden werden kann, wobei das erste Zahnrad in Verzahnungseingriff mit dem zweiten Zahnrad steht, wobei der primäre Planetenträger betriebsmäßig mit der Hauptwelle verbunden ist, und
wobei die Drehmomentverteilung zwischen der Vorderradachse (16) und der mindestens einen Hinterradachse (26, 28) auf der Grundlage eines von der zweiten Elektromaschine (118) auf das primäre Sonnenrad aufgebrachten Drehmoments gesteuert wird.

2. Kraftübertragungsanordnung (100) nach Anspruch 1, ferner umfassend ein Energiespeichersystem (200), das elektrisch mit der ersten und zweiten Elektromaschine verbunden ist, um die erste und zweite Elektromaschine mit elektrischer Energie zu versorgen.

3. Kraftübertragungsanordnung (100) nach einem Ansprüche 1 oder 2, wobei das primäres Planetengetriebe (108) betriebsmäßig konzentrisch mit der Hauptwelle (106) verbunden ist.

4. Kraftübertragungsanordnung (100) nach einem der vorhergehenden Ansprüche, wobei jedes der Planetenradeinheiten (116) des Planetengetriebes ein erstes Planetenrad (116'), das in Verzahnungseingriff mit dem primären Sonnenrad (110) angeordnet ist, und ein zweites Planetenrad (116") umfasst, das in Verzahnungseingriff mit dem primären Hohlrad (112) angeordnet ist, wobei das erste Planetenrad und das zweite Planetenrad auf einer gemeinsamen Planetenradwelle (117) angeordnet sind.

5. Kraftübertragungsanordnung (100) nach einem der vorhergehenden Ansprüche, wobei die Kraftübertragungsanordnung ferner eine Schaltanordnung (600) umfasst, die zwischen der ersten Elektromaschine (102) und der Hauptwelle (106) angeschlossen ist.

6. Kraftübertragungsanordnung (100) nach Anspruch 5, wobei die Schaltanordnung (600) umfasst
- ein erstes Planetengetriebe (610, 810), umfassend einen ersten Satz von Planetenelementen (611, 811), wobei der erste Satz von Planetenelementen ein erstes Sonnenrad (612, 812), ein erstes Hohlrad (614, 814) und einen ersten Planetenträger (616, 816) umfasst, der einen ersten Satz von Planetenrädern (618, 818) trägt, wobei der erste Satz von Planetenrädern in Verzahnungseingriff mit dem ersten Sonnenrad und dem ersten Hohlrad stehen,
- ein zweites Planetengetriebe (620, 820), umfassend einen zweiten Satz von Planetenelementen (621, 821), wobei der zweite Satz von Planetenelementen ein zweites Sonnenrad (622, 822), ein zweites Hohlrad (624, 824) und einen zweiten Planetenträger (626, 826) umfasst, der einen zweiten Satz von Planetenrädern (628, 828) trägt, wobei die Planetenräder des zweiten Satzes von Planetenrädern mit dem zweiten Sonnenrad und dem zweiten Hohlrad in Verzahnungseingriff stehen, wobei mindestens ein Element des ersten Planetengetriebes mit einem Element des zweiten Planetengetriebes betriebsmäßig verbunden ist, wobei ein Element des ersten Planetengetriebes mit der Hauptwelle verbunden ist und ein Element des zweiten Planetengetriebes mit der ersten Elektromaschine verbunden ist, und
- eine Gangwahlanordnung (62) umfassend
- einen ersten Verriegelungsmechanismus (64), der mit einem Element des ersten Planetengetriebes (610, 810) verbunden ist, und
- einen zweiten Verriegelungsmechanismus (66), der mit einem Element zweiten Planetengetriebes (620, 820) verbunden ist.

7. Kraftübertragungsanordnung (100) nach Anspruch 6, wobei
- das erste Sonnenrad (612) mit dem zweiten Planetenträger (626) betriebsmäßig verbunden ist,
- das erste Hohlrad (614) mit dem zweiten Planetenträger (624) betriebsmäßig verbunden ist,
- das zweite Sonnenrad (622) mit der ersten Elektromaschine (102) verbunden ist,
- das erste Hohlrad (614) und das zweite Hohlrad (624) mit der Hauptwelle (106) verbunden sind,
- der erste Verriegelungsmechanismus (64) mit dem ersten Planetenträger (616) verbunden ist, und
- der zweite Verriegelungsmechanismus (66) mit dem zweiten Planetenträger (626) und mit dem ersten Sonnenrad (612) verbunden ist.

8. Kraftübertragungsanordnung (100) nach Anspruch 6, wobei
- das erste Sonnenrad (612) mit dem zweiten Sonnenrad (622) betriebsmäßig verbunden ist,
- das erste Hohlrad (614) mit dem zweiten Planetenträger (626) betriebsmäßig verbunden ist,
- das erste (612) und zweite (624) Sonnenrad mit der ersten Elektromaschine (102) verbunden sind,
- der erste Planetenträger (616) mit der Hauptwelle (106) verbunden ist,
- der erste Verriegelungsmechanismus (64) mit dem ersten Hohlrad (614) und dem zweiten Planetenträger (626) verbunden ist, und
- der zweite Verriegelungsmechanismus (66) mit dem zweiten Hohlrad (624) verbunden ist.

9. Kraftübertragungsanordnung (100) nach Anspruch 6, wobei die Schaltanordnung ferner umfasst
- ein drittes Planetengetriebe (830) umfassend einen dritten Satz von Planetenelementen, wobei der dritte Satz von Planetenelementen ein drittes Sonnenrad (832), ein drittes Hohlrad (834) und einen dritten Planetenträger (836) umfasst, der einen dritten Satz von Planetenrädern (838) trägt, wobei die Planetenräder des dritten Satzes von Planetenrädern mit dem dritten Sonnenrad und dem dritten Hohlrad in Verzahnungseingriff stehen, wobei mindestens ein Element des dritten Planetengetriebes mit einem Element des zweiten Planetengetriebes betriebsmäßig verbunden ist, und wobei die Gangwahlanordnung ferner umfasst
- einen dritten Verriegelungsmechanismus (67), der mit einem Element des dritten Planetengetriebes (830) verbunden ist.

10. Kraftübertragungsanordnung (100) nach Anspruch 9, wobei
- das erste Hohlrad (814) mit dem zweiten Planetenträger (826) betriebsmäßig verbunden ist,
- das erste Sonnenrad (812) mit dem zweiten Hohlrad (824) und mit dem dritten Planetenträger (836) betriebsmäßig verbunden ist,
- das zweite Sonnenrad (822) mit dem dritten Sonnenrad (832) betriebsmäßig verbunden ist,
- das zweite (822) und dritte (832) Sonnenrad mit der ersten Elektromaschine (102) verbunden sind,
- das erste Hohlrad (814) und der zweite Planetenträger (826) mit der Hauptwelle (106) verbunden sind,
- der erste Verriegelungsmechanismus (64) mit dem ersten Planetenträger (816) verbunden ist,
- der zweite Verriegelungsmechanismus (66) mit dem zweiten Hohlrad (824) und mit dem ersten Sonnenrad (812) und dem dritten Planetenträger (836) verbunden ist, und
- der dritte Verriegelungsmechanismus (67) mit dem dritten Hohlrad (834) verbunden ist.

11. Kraftübertragungsanordnung (100) nach einem der Ansprüche 6-10, wobei die Schaltanordnung ein Getriebegehäuse (60) umfasst, wobei das Getriebegehäuse eine Getriebegehäuse-Wandanordnung (96) umfasst, die einen Getriebegehäusehohlraum (98) definiert, der zumindest das erste und das zweite Planetengetriebe umschließt, wobei zumindest ein äußerer Abschnitt jedes der ersten (64) und zweiten (66) Verriegelungsmechanismen auf einer Seite der Getriebegehäuse-Wandanordnung angeordnet ist und der Getriebegehäusehohlraum auf einer gegenüberliegenden Seite der Getriebegehäuse-Wandanordnung angeordnet ist.

12. Kraftübertragungsanordnung (100) nach Anspruch 11, wobei
- der erste Verriegelungsmechanismus so angepasst ist, dass er durch einen ersten Fluiddruck, der dem ersten Verriegelungsmechanismus zugeführt wird, so gesteuert wird, dass:
- für mindestens einen ersten Fluiddruck, der gleich dem Null-Überdruck ist, der erste Verriegelungsmechanismus so angepasst ist, dass er einen verriegelten Zustand einnimmt, in dem das Element des ersten Planetengetriebes mit dem Getriebegehäuse verriegelt ist, und
- der zweite Verriegelungsmechanismus so angepasst ist, dass er durch einen zweiten Fluiddruck, der dem zweiten Verriegelungsmechanismus zugeführt wird, so gesteuert wird, dass:
- für mindestens einen zweiten Fluiddruck, der gleich dem Null-Überdruck ist, der zweite Verriegelungsmechanismus so angepasst ist, dass er einen verriegelten Zustand einnimmt, in dem das Element des zweiten Planetengetriebes mit dem Getriebegehäuse verriegelt ist.

13. Kraftübertragungsanordnung (100) nach Anspruch 12, wobei der erste Verriegelungsmechanismus ein erstes Vorspannelement, vorzugsweise eine erste Federanordnung umfasst, das angepasst ist, um den ersten Verriegelungsmechanismus vorzuspannen, so dass er den verriegelten Zustand einnimmt, und wobei der zweite Verriegelungsmechanismus ein zweites Vorspannelement, vorzugsweise eine zweite Federanordnung umfasst, das angepasst ist, um den zweiten Verriegelungsmechanismus vorzuspannen, so dass er den verriegelten Zustand einnimmt.

14. Kraftübertragungsanordnung (100) nach einem der Ansprüche 6-13, wobei der erste Verriegelungsmechanismus (64) eine erste Bremsscheibe (72) und einen ersten Bremssattel (74) umfasst, und wobei der zweite Verriegelungsmechanismus (66) eine zweite Bremsscheibe (84) und einen zweiten Bremssattel (86) umfasst.

15. Kraftübertragungsanordnung (100) nach Anspruch 14, wenn sie von einem der Ansprüche 11-13 abhängt, wobei der äußere Abschnitt des ersten Verriegelungsmechanismus (64) die erste Bremsscheibe (72) und den ersten Bremssattel (74) umfasst, und wobei der äußere Abschnitt des zweiten Verriegelungsmechanismus (66) die zweite Bremsscheibe (84) und den zweiten Bremssattel (86) umfasst.

16. Kraftübertragungsanordnung (100) nach einem der Ansprüche 6-15, wobei die Gangwahlanordnung angepasst ist, um einen verriegelten Zustand einzunehmen, in dem sowohl der erste als auch der zweite Verriegelungsmechanismus einen verriegelten Zustand einnimmt.

17. Arbeitsmaschine (10) mit einer Vorderradachse, die mit einem Vorderradpaar verbunden ist, und mindestens einer Hinterradachse, die mit mindestens einem Hinterradpaar verbunden ist, und einer Kraftübertragungsanordnung nach einem der vorhergehenden Ansprüche, wobei die Vorderradachse mit dem zweiten Zahnrad verbunden ist und die mindestens eine Hinterradachse mit der Hauptwelle verbunden ist.

## Revendications

1. Agencement de chaîne cinématique (100) pour machine de travail (10), l'agencement de chaîne cinématique comprenant :
- une première machine électrique (102) agencée pour propulser la machine de travail, et
- un dispositif de distribution de couple variable en continu (104) configuré pour distribuer de manière contrôlée un couple provenant de la première machine électrique (102) entre un essieu de roue avant (16) et au moins un essieu de roue arrière (26, 28) de la machine de travail, le dispositif de distribution de couple variable en continu comprenant
- un arbre principal (106) pouvant être relié à la première machine électrique (102) et à au moins un essieu de roue arrière (26, 28),
- un train planétaire primaire (108) comprenant un pignon solaire primaire (110), une couronne dentée primaire (112) et un porte-satellites primaire (114) supportant un train d'unités d'engrenages planétaires (116), les d'unités d'engrenages planétaires étant en prise avec l'engrenage solaire primaire et la couronne dentée primaire, et
- une seconde machine électrique (118) reliée au pignon solaire primaire (110),
**caractérisé en ce que** le dispositif de répartition de couple variable en continu comprend en outre un étage d'engrenage (120) comprenant une première roue d'engrenage (122) reliée fonctionnellement à la couronne dentée primaire (112),
et une seconde roue d'engrenage (124) pouvant être reliée à l'essieu de roue avant, la première roue d'engrenage étant en prise avec la seconde roue d'engrenage, le porte-satellites primaire étant relié de manière fonctionnelle à l'arbre principal, et
la distribution de couple entre l'essieu de roue avant (16) et l'au moins un essieu de roue arrière (26, 28) étant commandée sur la base d'un couple appliqué sur l'engrenage solaire primaire par la seconde machine électrique (118).

2. Agencement de chaîne cinématique (100) selon la revendication 1, comprenant en outre un système de stockage d'énergie (200) connecté électriquement aux première et seconde machines électriques pour fournir de l'énergie électrique aux première et seconde machines électriques.

3. Agencement de chaîne cinématique (100) selon l'une quelconque des revendications 1 ou 2, dans lequel le train d'engrenages planétaires primaire (108) est connecté concentriquement à l'arbre principal (106).

4. Agencement de chaîne cinématique (100) selon l'une quelconque des revendications précédentes, dans lequel chacune des unités d'engrenages planétaires (116) du train d'unités d'engrenages planétaires comprend une première roue planétaire (116') agencée en prise d'engrènement avec le pignon solaire primaire (110), et une seconde roue planétaire (116") disposée en prise avec la couronne dentée primaire (112), la première roue planétaire et la seconde roue planétaire étant disposées sur un arbre de roue planétaire commun (117).

5. Agencement de chaîne cinématique (100) selon l'une quelconque des revendications précédentes, dans lequel l'Agencement de chaîne cinématique comprend en outre un agencement de changement de vitesse (600) connecté entre la première machine électrique (102) et l'arbre principal (106).

6. Agencement de chaîne cinématique (100) selon la revendication 5, dans lequel le dispositif de changement de vitesse (600) comprend
- un premier train d'engrenages planétaires (610, 810) comprenant un premier ensemble d'éléments planétaires (611, 811), le premier ensemble d'éléments planétaires comprenant un premier engrenage solaire (612, 812), une première roue dentée (614, 814) et un premier porte-satellites (616, 816) supportant un premier train d'engrenages planétaires (618, 818), les engrenages planétaires du premier train d'engrenages planétaires étant en prise avec le premier engrenage solaire et la première roue dentée,
- un deuxième train d'engrenages planétaires (620, 820) comprenant un second train grenages planétaires (621, 821), le second train d'engrenages planétaires comprenant un second engrenage solaire (622, 822), une deuxième roue dentée (624, 824) et un second porte-satellites (626, 826) supportant un deuxième train d'engrenages planétaires (628, 828), les engrenages planétaires du deuxième train d'engrenages planétaires étant en prise avec le second engrenage solaire et la seconde couronne dentée, au moins un élément du premier train d'engrenages planétaires étant relié fonctionnellement à un élément du deuxième train d'engrenages planétaires, un élément du premier train d'engrenages planétaires étant relié à l'arbre principal, et un élément du deuxième train d'engrenages planétaires étant relié à la première machine électrique, et
- un dispositif de sélection des vitesses (62), comprenant
- un premier mécanisme de verrouillage (64) relié à un élément du premier train d'engrenages planétaires (610, 810), et
- un deuxième mécanisme de verrouillage (66) relié à un élément du deuxième train d'engrenages planétaires (620, 820).

7. Agencement de chaîne cinématique (100) selon la revendication 6, dans lequel
- le premier engrenage solaire (612) est fonctionnellement relié au second porte-satellites (626),
- la première couronne dentée (614) est fonctionnellement reliée à la seconde couronne dentée (624),
- le second engrenage solaire (622) est relié à la première machine électrique (102),
- la première couronne dentée (614) et la seconde couronne dentée (624) sont reliées à l'arbre principal (106),
- le premier mécanisme de verrouillage (64) est relié au premier porte-satellites (616), et
- le deuxième mécanisme de verrouillage (66) est re second lié au deuxième porte-satellites (626) et au premier train d'engrenages planétaires (612).

8. Agencement de chaîne cinématique (100) selon la revendication 6, dans lequel
- le premier engrenage solaire (612) est fonctionnellement lié au second engrenage solaire (622),
- la première couronne dentée (614) est fonctionnellement reliée au second porte-satellites (626),
- les premier (612) et second (624) engrenages solaires sont reliés à la première machine électrique (102),
- le premier porte-satellites (616) est relié à l'arbre principal (106),
- le premier mécanisme de verrouillage (64) est relié à la première couronne dentée (614) et au second porte-satellites (626), et
- le deuxième mécanisme de verrouillage (66) est relié à la seconde couronne dentée (624).

9. Agencement de chaîne cinématique (100) selon la revendication 6, dans lequel l'agencement de changement de vitesse comprend en outre
- un troisième train d'engrenages planétaires (830) comprenant un troisième train d'éléments planétaires, le troisième train d'engrenages planétaires comprenant un troisième engrenage solaire (832), une troisième couronne dentée (834) et un troisième porte-satellites (836) supportant un troisième train d'engrenages planétaires (838), engrenages planétaires les satellites du troisième train d'engrenages planétaires étant en prise avec le troisième train d'engrenages planétaires et la troisième couronne dentée, au moins un élément du troisième train d'engrenages planétaires étant relié de manière fonctionnelle à un élément du deuxième train d'engrenages planétaires, et le dispositif de sélection de vitesse comprenant en outre
- un troisième mécanisme de verrouillage (67) relié à un élément du troisième train d'engrenages planétaires (830).

10. Agencement de chaîne cinématique (100) selon la revendication 9, dans lequel
- la première couronne dentée (814) est fonctionnellement reliée au deuxième porte-satellites (826),
- le premier engrenage solaire (812) est fonctionnellement relié à la deuxième couronne dentée (824) et au troisième porte-satellites (836),
- le deuxième engrenage solaire (822) est fonctionnellement relié au troisième engrenage solaire (832),
- les deuxième (822) et troisième (832) engrenages solaires sont reliés à la première machine électrique (102),
- la première couronne dentée (814) et le deuxième porte-satellites (826) sont reliés à l'arbre principal (106),
- le premier mécanisme de verrouillage (64) est relié au premier porte-satellites (816),
- le deuxième mécanisme de verrouillage (66) est relié à la deuxième couronne dentée (824), au premier engrenage solaire (812) et au troisième porte-satellites (836), et
- le troisième mécanisme de verrouillage (67) est relié à la troisième couronne dentée (834).

11. Agencement de chaîne cinématique (100) selon l'une quelconque des revendications 6 à 10, dans lequel l'agencement de changement de vitesse comprend une boîte de transmission (60), la boîte de transmission comprenant un ensemble de paroi de boîte (96) définissant une cavité de boîte de transmission (98) renfermant au moins les premier et second trains d'engrenages planétaires, au moins une partie externe de chacun des premier (64) et second (66) mécanismes de verrouillage étant située sur un côté de l'ensemble de paroi de boîte de transmission et la cavité de boîte de transmission étant située sur un côté opposé de l'ensemble de paroi de boîte de transmission.

12. Agencement de chaîne cinématique (100) selon la revendication 11, dans lequel
- le premier mécanisme de verrouillage est adapté pour être commandé par une première pression de fluide reliée au premier mécanisme de verrouillage de telle sorte que :
- pour au moins une première pression de fluide égale à une surpression nulle, le premier mécanisme de verrouillage est adapté pour prendre une position verrouillée dans laquelle l'élément du premier ensemble d'engrenages planétaires est verrouillé sur la boîte de transmission, et
- le deuxième mécanisme de verrouillage est apte à être commandé par une seconde pression de fluide dirigée vers le deuxième mécanisme de verrouillage de telle sorte que :
- pour au moins une seconde pression de fluide égale à une surpression nulle, le deuxième mécanisme de verrouillage est adapté pour prendre une position verrouillée dans laquelle l'élément du second train d'engrenages planétaires est verrouillée sur la boîte de transmission.

13. Agencement de chaîne cinématique (100) selon la revendication 12, dans lequel le premier mécanisme de verrouillage comprend un premier élément de sollicitation, de préférence un premier agencement de ressort, adapté pour solliciter le premier mécanisme de verrouillage de manière à prendre l'état verrouillé, et le deuxième mécanisme de verrouillage comprend un second élément de sollicitation, de préférence un second agencement de ressort, conçu pour solliciter le deuxième mécanisme de verrouillage de manière à prendre l'état verrouillé.

14. Agencement de chaîne cinématique (100) selon l'une quelconque des revendications 6 à 13, dans lequel le premier mécanisme de verrouillage (64) comprend un premier disque de frein (72) et un premier étrier de frein (74), et le deuxième mécanisme de verrouillage (66) comprend un second disque de frein (84) et un second étrier de frein (86).

15. Agencement de chaîne cinématique (100) selon la revendication 14 lorsqu'elle dépend de l'une quelconque des revendications 11 à 13, dans lequel la partie externe du premier mécanisme de verrouillage (64) comprend le premier disque de frein (72) et le premier étrier de frein (74), et la partie externe du deuxième mécanisme de verrouillage (66) comprend le second disque de frein (84) et le second étrier de frein (86).

16. Agencement de chaîne cinématique (100) selon l'une quelconque des revendications 6 à 15, dans lequel l'agencement de sélection de vitesse est adapté pour prendre une position verrouillée dans laquelle chacun des premier et second mécanismes de verrouillage prend une position verrouillée.

17. Machine de travail (10) comprenant un essieu de roue avant relié à une paire de roues avant, et au moins un essieu de roue arrière relié à au moins une paire de roues arrière, et un agencement de chaîne cinématique selon l'une quelconque des revendications précédentes, l'essieu de roue avant étant relié à la deuxième roue dentée et l'au moins un essieu de roue arrière étant relié à l'arbre principal.
